# EUROPEAN PATENT SPECIFICATION

(11) **EP 3 440 417 B1**
(45) Date of publication and mention of the grant of the patent: **21.07.2021**
(21) Application number: 17718239.1
(22) Date of filing: 04.04.2017
(51) Int. Cl.: F25D 11/00

(54) **TRANSPORT REFRIGERATION UNIT**
TRANSPORTKÜHLEINHEIT
UNITÉ DE RÉFRIGÉRATION DE TRANSPORT

(30) Priority: 04.04.2016 US 201662317723 P
(43) Date of publication of application: 13.02.2019
(73) Proprietor: Carrier Corporation, Farmington, CT 06032 (US)
(72) Inventor: CHOPKO, Robert, A., Syracuse NY 13221 (US); CHEN, Yu, H., Syracuse NY 13221 (US); DELDICQUE, Greg, Farmington CT 06032 (US); ADETOLA, Veronica, East Hartford CT 06108 (US)
(74) Representative: Dehns
(86) International application number: PCT/US2017/025853
(87) International publication number: WO 2017/176682

(56) References cited:
- WO-A1-2012/138497
- WO-A1-2014/152299
- JP-A- 2012 191 712
- US-A1- 2013 247 600

## Description

### BACKGROUND

The present disclosure relates to transport refrigeration units and, more particularly, to a power management system for the transport refrigeration unit.

Traditional refrigerated cargo trucks or refrigerated tractor trailers, such as those utilized to transport cargo via sea, rail, or road, is a truck, trailer or cargo container, generally defining a cargo compartment, and modified to include a refrigeration system located at one end of the truck, trailer, or cargo container. Refrigeration systems typically include a compressor, a condenser, an expansion valve, and an evaporator serially connected by refrigerant lines in a closed refrigerant circuit in accord with known refrigerant vapor compression cycles. A power unit, such as a combustion engine, drives the compressor of the refrigeration unit, and may be diesel powered, natural gas powered, or other type of engine. In many tractor trailer transport refrigeration systems, the compressor is driven by the engine shaft either through a belt drive or by a mechanical shaft-to-shaft link. In other systems, the engine of the refrigeration unit drives a generator that generates electrical power, which inturn drives the compressor.

With current environmental trends, improvements in transport refrigeration units is desirable particularly toward aspects of environmental impact. With environmentally friendly refrigeration units, improvements in reliability, cost, and weight reduction is also desirable.

JP 2012191712 A discloses an electric vehicle and a method of controlling a voltage with the aim of preserving the lifetime of an air conditioning apparatus.

WO 2014/152299 A1 discloses a generator set for a transport refrigeration unit. A controller can change the speed of the generator to maintain a desired temperature within the transport refrigeration unit.

WO 2012/138497 discloses a power supply system for a transport refrigeration system.

### SUMMARY

A transport refrigeration unit for controllably cooling a container as claimed in claim 1 is provided.

Optionally, the signal outputted by the engine speed sensor is indicative of a high engine speed and a low engine speed.

The power management system may include a forward cargo temperature sensor for measuring temperature in a forward portion of the container and a rearward cargo temperature sensor for measuring temperature in a rearward portion of the container, and outputting respective signals to the computer-based controller toward generation of the diagnostic data.

The power management system may include a condenser fan motor current sensor and an evaporator fan motor current sensor configured to output respective signals to the computer-based controller toward generation of the diagnostic data.

The transport refrigeration unit may include an expansion valve operatively disposed between an outlet of the condenser heat exchanger and an inlet of the evaporator heat exchanger, and wherein the power management system includes an expansion valve pressure sensor configured to output a signal to the computer-based controller toward generation of the diagnostic data.

The transport refrigeration unit may include a suction modulating valve operatively disposed between an outlet of the evaporator heat exchanger and an inlet of the compressor, and wherein the power management system includes a suction modulating valve pressure sensor configured to output a signal to the computer-based controller toward generation of the diagnostic data.

The compressor motor may be an AC motor configured to receive AC power from the generator, and wherein the condenser and evaporator fan motors may be DC motors configured to receive DC power from the battery.

The refrigerant may be a natural refrigerant.

A tractor trailer system as claimed in claim 9 is also provided.

The foregoing features and elements as well as the operation thereof will become more apparent in light of the following description and the accompanying drawings. However, it should be understood that the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a perspective view of a tractor trailer system having a transport refrigeration unit;
FIG. 2 is a schematic of the transport refrigeration unit;
FIG. 3 is an electrical schematic of the transport refrigeration unit illustrating power loads;
FIG. 4 is a schematic of the transport refrigeration unit illustrating portions of a power management system of the transport refrigeration unit; and
FIG. 5 is a schematic of the power management system.

### DETAILED DESCRIPTION

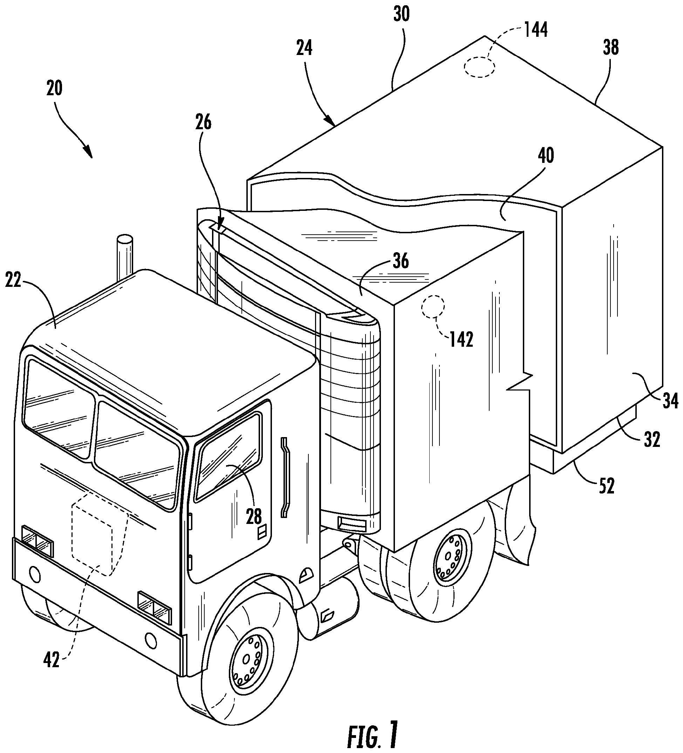

Referring to FIG. 1, a tractor trailer system 20 of the present disclosure is illustrated. The tractor trailer system 20 may include a tractor or truck 22, a trailer 24 and a transport refrigeration unit 26. The tractor 22 may include an operator's compartment or cab 28 and a combustion engine 42 which is part of the powertrain or drive system of the tractor 22. The trailer 24 may be coupled to the tractor 22 and is thus pulled or propelled to desired destinations. The trailer may include a top wall 30, a bottom wall 32 opposed to and spaced from the top wall 30, two side walls 34 space from and opposed to one-another, and opposing front and rear walls 36, 38 with the front wall 36 being closest to the tractor 22. The trailer 24 may further include doors (not shown) at the rear wall 38, or any other wall. The walls 30, 32, 34, 36, 38 together define the boundaries of a cargo compartment 40. The cargo compartment may also be divided into two or more smaller compartments for different temperature cargo requirements.

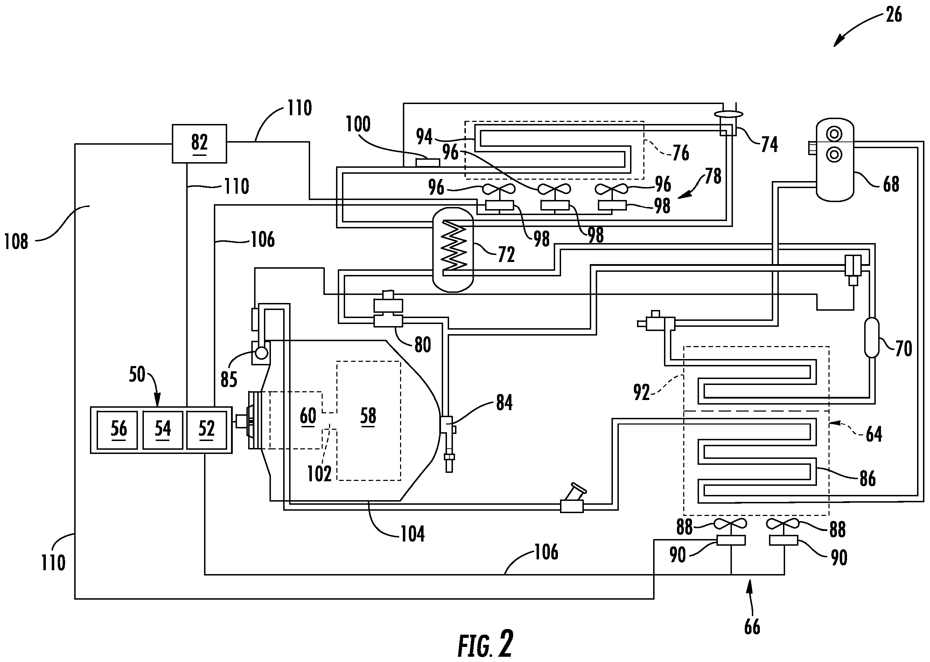

Referring to FIGS. 1 and 2, the trailer 24 is generally constructed to store a cargo (not shown) in the compartment 40. The transport refrigeration unit 26 is generally integrated into the trailer 24 and may be mounted to the front wall 36. The cargo is maintained at a desired temperature by cooling of the compartment 40 via the transport refrigeration unit 26 that circulates air into and through the cargo compartment 40 of the trailer 24. It is further contemplated and understood that the transport refrigeration unit 26 may be applied to any transport container and not necessarily those used in tractor trailer systems. Furthermore, the transport container may be a part of the trailer 24 and constructed to be removed from a framework and wheels (not shown) of the trailer 24 for alternative shipping means (e.g., marine, rail, flight, and others).

The transport refrigeration unit 26 includes a compressor 58, an electric compressor motor 60, a condenser heat exchanger 64 that is air cooled, a condenser fan assembly 66, an evaporator heat exchanger 76, an evaporator fan assembly 78, and a controller 82 that includes a computer-based processor (e.g., microprocessor) and may include a receiver 68, a filter dryer 70, a heat exchanger 72, a thermostatic expansion valve 74 and a suction modulation valve 80. Operation of the transport refrigeration unit 26 may best be understood by starting at the compressor 58, where the suction gas (i.e., natural refrigerant) enters the compressor at a suction port 84 and is compressed to a higher temperature and pressure. The refrigerant gas is emitted from the compressor 58 at an outlet port 85 and may then flow into tube(s) 86 of the condenser heat exchanger 64.

Air flowing across a plurality of condenser coil fins (not shown) and the tubes 86, cools the gas to its saturation temperature. The air flow across the condenser heat exchanger 64 may be facilitated by one or more fans 88 of the condenser fan assembly 66. The condenser fans 88 may be driven by respective condenser fan motors 90 of the fan assembly 66 that may be electric.

By removing latent heat, the gas within the tubes 86 condenses to a high pressure and high temperature liquid and flows to the receiver 68 that provides storage for excess liquid refrigerant during low temperature operation. From the receiver 68, the liquid refrigerant may pass through a sub-cooler heat exchanger 92 of the condenser heat exchanger 64, through the filter-dryer 70 that keeps the refrigerant clean and dry, then to the heat exchanger 72 that increases the refrigerant subcooling, and finally to the thermostatic expansion valve 74.

As the liquid refrigerant passes through the orifices of the expansion valve 74, some of the liquid vaporizes into a gas (i.e., flash gas). Return air from the refrigerated space (i.e., cargo compartment 40) flows over the heat transfer surface of the evaporator heat exchanger 76. As the refrigerant flows through a plurality of tubes 94 of the evaporator heat exchanger 76, the remaining liquid refrigerant absorbs heat from the return air, and in so doing, is vaporized.

The evaporator fan assembly 78 includes one or more evaporator fans 96 that are driven by respective fan motors 98 that may be electric. The air flow across the evaporator heat exchanger 76 is facilitated by the evaporator fans 96. From the evaporator heat exchanger 76, the refrigerant, in vapor form, may then flow through the suction modulation valve 80, and back to the compressor 58. A thermostatic expansion valve bulb sensor 100 may be located proximate to an outlet of the evaporator tube 94. The bulb sensor 100 is intended to control the thermostatic expansion valve 74, thereby controlling refrigerant superheat at an outlet of the evaporator tube 94. It is further contemplated and understood that the above generally describes a single stage vapor compression system that may be used for natural refrigerants such as propane and ammonia. Other refrigerant systems may also be applied that use carbon dioxide (CO2) refrigerant, and that may be a two-stage vapor compression system.

A bypass valve (not shown) may facilitate the flash gas of the refrigerant to bypass the evaporator heat exchanger 76. This will allow the evaporator coil to be filled with liquid and completely 'wetted' to improve heat transfer efficiency. With CO2 refrigerant, this bypass flash gas may be re-introduced into a mid-stage of a two-stage compressor.

The compressor 58 and the compressor motor 60 may be linked via an interconnecting drive shaft 102. The compressor 58, the compressor motor 60 and the drive shaft 102 may all be sealed within a common housing 104. In some embodiments, the compressor motor 60 may be positioned outside of the compressor housing 104, and therefore the interconnecting drive shaft 102 passes through a shaft seal in the compressor housing. The compressor 58 may be a single compressor. The single compressor may be a two-stage compressor, a scroll-type compressor or other compressors adapted to compress natural refrigerants. The natural refrigerant may be CO2, propane, ammonia, or any other natural refrigerant that may include a global-warming potential (GWP) of about one (1).

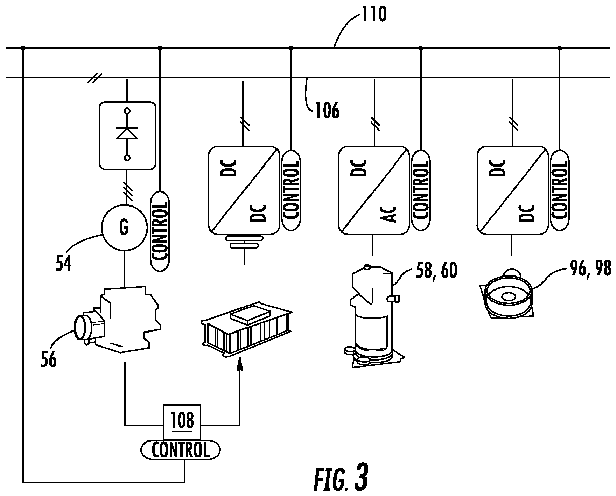

Referring to FIG. 2, the transport refrigeration unit 26 further includes a multiple energy source 50 configured to selectively power the compressor motor 60, the condenser fan motors 90, the evaporator fan motors 98, the controller 82, and other components 99 (see FIG. 3), which may include various solenoids and/or sensors. The power may be transferred over various buses and/or electrical conductors 106. The multiple energy source 50 includes an energy storage device 52, and a generator 54 mechanically driven by a combustion engine 56 that may be part of, and dedicated to, the transport refrigeration unit 26. The energy storage device 52 is a battery. In one embodiment, the energy storage device 52 may be secured to the underside of the bottom wall 32 of the trailer 24 (see FIG. 1).

Referring to FIGS. 2 and 3, power management relative to the multiple energy source 50 and controlled power distribution relative to the various power loads is configured/arranged to minimize the size of the combustion engine 56 and minimize fossil fuel consumption while still providing enough electric power to meet temperature pulldown demands of the operating transport refrigeration unit 26. The controller 82 through a series of data and command signals over various pathways 110 may, for example, control the electric motors 60, 90, 98 as dictated by the cooling needs of the refrigeration unit 26. The controller 82 controls the electric power output of the generator 54 and the batteries 52 in order to meet the varying load demands of transport refrigeration unit 26.

In one example, the generator 54 and the battery 52 may be electrically arranged in series. The electric power may be generally distributed through the bus 106, and may be direct current (DC). A converter (not shown) may be arranged at the outlet of the generator 54. The fan motors 90, 98 may be DC motors, and the compressor motor 60 may be an alternating current (AC) motor with an inverter (not shown) at the power input to the motor 60. In one example, the generator 54 may have a maximum power output of about 15kW, the battery 52 may output electric power at about 10kW, the steady state compressor motor 60 load may be about 10kW, and the evaporator fan motor 98 and condenser fan motor 90 load may be about 2kW. It is further contemplated and understood that various power conditioning devices may be configured throughout the transport refrigeration unit 26 depending upon the current type and voltage demands of any particular component.

In one embodiment, the generator 54 may be configured or downsized to provide substantially all of the electric power demands of the transport refrigeration unit 26 including the motors 60, 90, 98 during standard set point conditions (i.e., steady state conditions). However, when the transport refrigeration unit 26 is operating in a temperature pulldown state, the batteries 52 are available as a 'battery boost' to increase or supplement the DC power through the bus 106 thereby satisfying the temporary increase in power demand of, for example, the compressor motor 60. In this embodiment, the voltage potential of the batteries 52 may be about 5kW-7 kW.

In another embodiment, the batteries 52 may be configured to provide substantially all of the electric power demands of the transport refrigeration unit 26 including the motors 60, 90, 98 during standard set point conditions (i.e., steady state conditions). However, when the transport refrigeration unit 26 is operating in a temperature pulldown state, the generator 54 is available as a 'boost' to increase or supplement the DC power through the bus 106 thereby satisfying the temporary increase or surge in power demand of, for example, the compressor motor 60. In this embodiment, the voltage potential of the batteries 52 may be about 15 kW.

The transport refrigeration unit 26 further includes a battery charger 108 that is powered by the generator 54 during part-load operating conditions of the transport refrigeration unit 26 (i.e., partial compressor load conditions), and controlled by the controller 82. The battery charger 108 may be controlled by the controller 82 and is configured to charge the batteries 52 when needed and during ideal operating conditions. By charging the batteries 52 during reduced compressor load conditions, the size and weight of the generator 54 and driving engine 56 may be minimized.

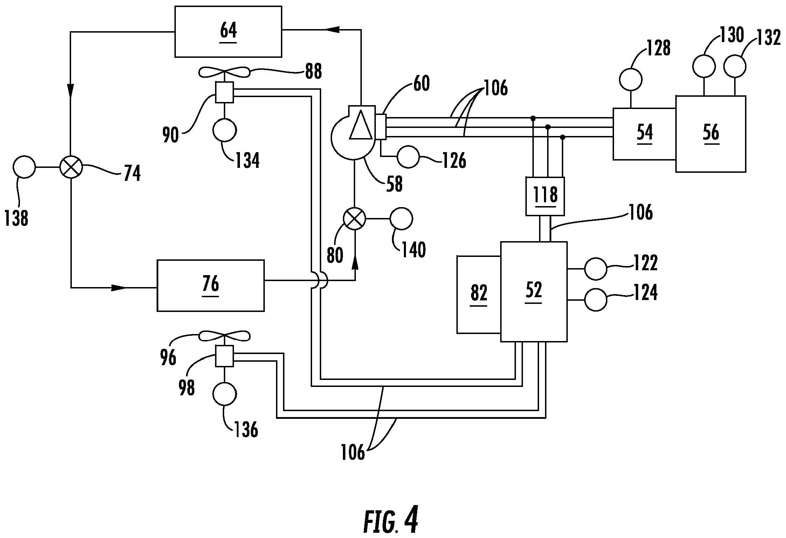

Referring to FIGS. 4 through 5, the generator 54 may be constructed and arranged to provide AC power to the compressor motor 60, and to an inverter or rectifier 118 that may be part of the battery charger 108 (see FIG. 3) for charging the battery 52. The battery 52 may be constructed and arranged to provide DC power to the condenser and evaporator fan motors 90, 98. To, in-part, distribute the AC and DC power, the transport refrigeration unit 26 includes a power management system 120. The power management system 120 includes the computer-based controller 82 (or a separate controller), that may be, or include, an electronic processor (e.g., micro-processor). The management system 120 includes a plurality of sensors located throughout the transport refrigeration unit 26 and tractor trailer system 20 that provide various forms of performance data that are used as tools for tracking and monitoring of the cargo, and prognostics and diagnostics useful for the efficient and reliable operation of the transport refrigeration unit 26.

The various sensors of the power management system 120 include a battery temperature sensor 122, a battery current sensor 124, a compressor motor current sensor 126, a generator current sensor 128, an engine coolant temperature sensor 130, an engine speed sensor 132, and may include a condenser fan motor current sensor 134, an evaporator fan motor current sensor 136, an expansion valve pressure sensor 138, a suction modulating valve pressure sensor 140, a forward cargo temperature sensor 142, a rearward cargo temperature sensor 144, and other sensors. Each sensor is configured to output a signal to the controller 82 that is configured to generate diagnostic data from the signals.

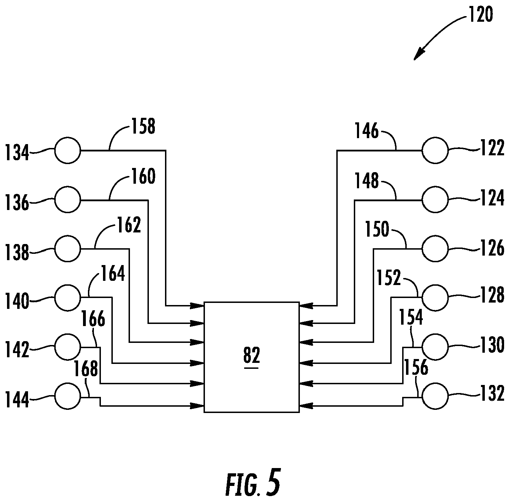

The battery temperature sensor 122 is configured to output a battery temperature data signal (see arrow 146 in FIG. 5) to the controller 82, and facilitates the algorithmic decision as to the optimum temperature for battery discharge or if pre-warming of the battery is necessary for start-up conditions in cold ambients.

The battery current sensor 124 is configured to output a battery current data signal (see arrow 148 in FIG. 5) to the controller, and facilitates the algorithmic decision as to when the battery charge is too low and is need of charge from the generator, or if a motor device is damaged and is drawing excess power.

The compressor motor current sensor 126 outputs a compressor current data signal (see arrow 150 in FIG. 5) to the controller 82 that may be indicative of an over-temperature condition of the compressor motor 60. Alternatively, this information facilitates the prognostics algorithms indicating when the compressor motor is damaged and estimating the remaining life of the compressor.

The generator current sensor 128 is configured to output a generator current data signal (see arrow 152 in FIG. 5) to the controller 82, and facilitates the algorithmic decision if a downstream motor device is damaged and is drawing excess power.

The engine coolant temperature sensor 130 is configured to output an engine coolant temperature data signal (see arrow 154 in FIG. 5) to the controller 82, and facilitates an algorithmic decision that the engine is operating at the optimum fuel consumption and efficiency.

The engine speed sensor 132 outputs an engine speed data signal (see arrow 156 in FIG. 5) to the controller 82. The controller 82 may be pre-programmed with multiple engine speed set points that facilitate the most efficient fuel consumption at a given cargo setpoint and ambient condition.

The condenser fan motor current sensor 134 outputs a condenser fan motor current data signal (see arrow 158 in FIG. 5) to the controller 82 that may be indicative of an over-temperature condition of the condenser fan motor 90. Alternatively, this information facilitates the prognostics algorithms indicating when the condenser fan motor is damaged and estimating the remaining life of the motor .

The evaporator fan motor current sensor 136 outputs an evaporator fan motor current data signal (see arrow 160 in FIG. 5) to the controller 82 that may be indicative of an over-temperature condition of the evaporator fan motor 98. Alternatively, this information facilitates the prognostics algorithms indicating when the evaporator fan motor is damaged and estimating the remaining life of the motor .

The expansion valve pressure sensor 138 is configured to output an expansion valve pressure data signal (see arrow 162 in FIG. 5) to the controller 82, and facilitates an algorithm indicating proper expansion valve performance given a compressor speed and compressor pressure ratios. In addition, refrigerant leaks can be determined based on these pressures which would then send an alarm and optimize the compressor speed for a 'limp home' mode.

The suction modulating valve pressure sensor 140 is configured to output a modulating valve pressure data signal (see arrow 164 in FIG. 5) to the controller 82, and facilitates an algorithm indicating proper suction modulating valve performance given a compressor speed and compressor pressure ratios. In addition, refrigerant leaks can be determined based on these pressures which would then send an alarm and optimize the compressor speed for a 'limp home' mode.

The forward cargo temperature sensor 142 (see FIGS. 1 and 5) is configured to output a forward cargo temperature data signal (see arrow 166) to controller 82, and facilitate an algorithm that will optimize the unit behavior based on nearness to set point and available battery charge

The rearward cargo temperature sensor 144 (see FIGS. 1 and 5) is configured to output a rearward cargo temperature data signal (see arrow 168) to controller 82, and facilitates an algorithm that will optimize the unit behavior based on nearness to set point and available battery charge.

Benefits of the present disclosure include a power management system 120 that facilitates optimization between the battery 52 usage and the transport refrigeration unit operation towards an optimal overall performance, lower fuel consumption, optimal battery life, and optimal aftermarket servicing capability due to prognostics capabilities. Other benefits of the present disclosure when compared to more traditional transport refrigeration units include a refrigeration unit that may emit less noise and may be lighter in weight. Yet further, the present disclosure includes an energy storage device that is conveniently and efficiently recharged to meet the power demands of the refrigeration unit while meeting combustion engine power and emission requirements that may be enforced by regulatory/government agencies.

## Claims

1. A transport refrigeration unit (26) for controllably cooling a container, the transport refrigeration unit comprising:
a compressor (58) constructed and arranged to compress a refrigerant;
a compressor motor (60) configured to drive the compressor;
a condenser heat exchanger (64) operatively coupled to the compressor (58);
a condenser fan (88) configured to provide air flow over the condenser heat exchanger;
a condenser fan motor (90) for driving the condenser fan;
an evaporator heat exchanger (76) operatively coupled to the compressor;
an evaporator fan (96) configured to provide air flow over the evaporator heat exchanger;
an evaporator fan motor (98) for driving the evaporator fan;
a battery (52) configured to at least in-part provide electric power to the compressor motor;
a battery charger (108) configured to charge the battery;
a generator (54) configured to provide electric power to the compressor motor and the battery charger;
a combustion engine (56) constructed and arranged to drive the generator (54); and
a power management system (120) including a battery temperature sensor (122), a battery current sensor (124), a compressor motor current sensor (126), a generator current sensor (128) and a computer-based controller (82) configured to receive and process respective signals from the battery temperature sensor, the battery current sensor, the compressor motor current sensor and the generator current sensor for generating diagnostic data;
wherein the power management system is configured to control power distribution via the generator and/or the battery;
wherein the battery charger is powered by the generator during part-load operating conditions of the transport refrigeration unit;
wherein at least one of the generator (54) and the battery (52) is configured to provide electric power to the condenser fan and evaporator fan motors;
wherein the power management system (120) includes an engine coolant temperature sensor (130) configured to output a signal to the computer-based controller (82) toward generation of the diagnostic data; and
wherein the power management system (120) includes an engine speed sensor (132) configured to output a signal to the computer-based controller (82) toward generation of the diagnostic data.

2. The transport refrigeration unit (26) set forth in claim 1, wherein the signal outputted by the engine speed sensor (132) is indicative of a high engine speed and a low engine speed.

3. The transport refrigeration unit (26) set forth in claim 1, wherein the power management system (120) includes a condenser fan motor current sensor (134) and an evaporator fan motor current sensor (136) configured to output respective signals to the computer-based controller (82) toward generation of the diagnostic data.

4. The transport refrigeration unit (26) set forth in claim 3, further comprising:
an expansion valve (74) operatively disposed between an outlet of the condenser heat exchanger (64) and an inlet of the evaporator heat exchanger (76), and wherein the power management system (120) includes an expansion valve pressure sensor (138) configured to output a signal to the computer-based controller (82) toward generation of the diagnostic data.

5. The transport refrigeration unit (26) set forth in claim 4, further comprising:
a suction modulating valve (80) operatively disposed between an outlet of the evaporator heat exchanger (76) and an inlet of the compressor (58), and wherein the power management system (120) includes a suction modulating valve pressure sensor (140) configured to output a signal to the computer-based controller (82) toward generation of the diagnostic data.

6. The transport refrigeration unit (26) set forth in claim 1 or 3, wherein the power management system (120) includes a forward cargo temperature sensor (142) for measuring temperature in a forward portion of the container and a rearward cargo temperature sensor (144) for measuring temperature in a rearward portion of the container, and outputting respective signals to the computer-based controller (82) toward generation of the diagnostic data.

7. The transport refrigeration unit (26) set forth in claim 3, wherein the compressor motor (60) is an AC motor configured to receive AC power from the generator (54), and wherein the condenser and evaporator fan motors (90, 98) are DC motors configured to receive DC power from the battery (52).

8. The transport refrigeration unit (26) set forth in claim 3, wherein the refrigerant is a natural refrigerant.

9. A tractor trailer system (20) comprising a tractor (22) and a trailer (24), wherein the transport refrigeration unit (26) of any preceding claim is integrated into the trailer (24).

## Patentansprüche

1. Transportkühleinheit (26) zum kontrollierten Kühlen eines Containers, wobei die Transportkühleinheit Folgendes umfasst:
einen Kompressor (58), der konstruiert und angeordnet ist, um ein Kühlmittel zu komprimieren;
einen Kompressormotor (60), der ausgelegt ist, um den Kompressor anzutreiben;
einen Kondensator-Wärmetauscher (64), der funktionell mit dem Kompressor (58) gekoppelt ist;
einen Kondensatorlüfter (88), der ausgelegt ist, um Luftstrom über dem Kondensator-Wärmetauscher bereitzustellen;
einen Kondensatorlüftermotor (90) zum Antreiben des Kondensatorlüfters;
einen Verdampfer-Wärmetauscher (76), der funktionell mit dem Kompressor gekoppelt ist;
einen Verdampferlüfter (96), der ausgelegt ist, um Luftstrom über dem Verdampfer-Wärmetauscher bereitzustellen;
einen Verdampferlüftermotor (98) zum Antreiben des Verdampferlüfters;
eine Batterie (52), die ausgelegt ist, um mindestens zum Teil elektrische Leistung für den Kompressormotor bereitzustellen;
ein Batterieladegerät (108), das ausgelegt ist, um die Batterie zu laden;
einen Generator (54), der ausgelegt ist, um elektrische Leistung für den Kompressormotor und das Batterieladegerät bereitzustellen;
einen Verbrennungsmotor (56), der konstruiert und angeordnet ist, um den Generator (54) anzutreiben; und
ein Leistungsverwaltungssystem (120), das einen Batterietemperaturfühler (122), einen Batteriestromfühler (124), einen Kompressormotor-Stromfühler (126), einen Generator-Stromfühler (128) und eine computergestützte Steuereinheit (82) einschließt, die ausgelegt ist, um jeweilige Signale von dem Batterietemperaturfühler, dem Batteriestromfühler, dem Kompressormotor-Stromfühler und dem Generator-Stromfühler zum Erzeugen von Diagnosedaten zu empfangen und zu verarbeiten;
wobei das Leistungsverwaltungssystem ausgelegt ist, um Leistungsverteilung über den Generator und/oder die Batterie zu steuern;
wobei das Batterieladegerät während Bedingungen des Teillastbetriebs der Transportkühleinheit von dem Generator mit Leistung versorgt wird;
wobei mindestens eines des Generators (54) und der Batterie (52) ausgelegt ist, um elektrische Leistung für den Kondensatorlüfter- und Verdampferlüftermotor bereitzustellen;
wobei das Leistungsverwaltungssystem (120) einen Motorkühlmittel-Temperaturfühler (130) einschließt, der ausgelegt ist, um an die computergestützte Steuereinheit (82) ein Signal zur Erzeugung der Diagnosedaten auszugeben; und
wobei das Leistungsverwaltungssystem (120) einen Motorgeschwindigkeitsfühler (132) einschließt, der ausgelegt ist, um an die computergestützte Steuereinheit (82) ein Signal zur Erzeugung der Diagnosedaten auszugeben.

2. Transportkühleinheit (26) nach Anspruch 1, wobei das von dem Motorgeschwindigkeitsfühler (132) ausgegebene Signal für eine hohe Motorgeschwindigkeit und eine niedrige Motorgeschwindigkeit anzeigend ist.

3. Transportkühleinheit (26) nach Anspruch 1, wobei das Leistungsverwaltungssystem (120) einen Kondensatorlüftermotor-Stromfühler (134) und einen Verdampferlüftermotor-Stromfühler (136) einschließt, die ausgelegt sind, um an die computergestützte Steuereinheit (82) jeweilige Signale zur Erzeugung der Diagnosedaten auszugeben.

4. Transportkühleinheit (26) nach Anspruch 3, weiter umfassend:
ein Expansionsventil (74), das funktionell zwischen einem Auslass des Kondensator-Wärmetauschers (64) und einem Einlass des Verdampfer-Wärmetauschers (76) angeordnet ist, und wobei das Leistungsverwaltungssystem (120) einen Expansionsventil-Druckfühler (138) einschließt, der ausgelegt ist, um an die computergestützte Steuereinheit (82) ein Signal zur Erzeugung der Diagnosedaten auszugeben.

5. Transportkühleinheit (26) nach Anspruch 4, weiter umfassend:
ein Ansaugmodulatorventil (80), das funktionell zwischen einem Auslass des Verdampfer-Wärmetauschers (76) und einem Einlass des Kompressors (58) angeordnet ist, und wobei das Leistungsverwaltungssystem (120) einen Ansaugmodulatorventil-Druckfühler (140) einschließt, der ausgelegt ist, um an die computergestützte Steuereinheit (82) ein Signal zur Erzeugung der Diagnosedaten auszugeben.

6. Transportkühleinheit (26) nach Anspruch 1 oder 3, wobei das Leistungsverwaltungssystem (120) einen vorderen Ladungstemperaturfühler (142) zum Messen von Temperatur in einem vorderen Abschnitt des Containers und einen rückwärtigen Ladungstemperaturfühler (144) zum Messen von Temperatur in einem hinteren Abschnitt des Containers, und um an die computergestützte Steuereinheit (82) jeweilige Signale zur Erzeugung der Diagnosedaten auszugeben, einschließt.

7. Transportkühleinheit (26) nach Anspruch 3, wobei der Kompressormotor (60) ein Wechselstrommotor ist, der ausgelegt ist, um Wechselstromleistung von dem Generator (54) zu empfangen, und wobei der Kondensator- und Verdampferlüftermotor (90, 98) Gleichstrommotoren sind, die ausgelegt sind, um Gleichstromleistung von der Batterie (52) zu empfangen.

8. Transportkühleinheit (26) nach Anspruch 3, wobei das Kühlmittel ein natürliches Kühlmittel ist.

9. Zugmaschine-Anhänger-System (20), umfassend eine Zugmaschine (22) und einen Anhänger (24), wobei die Transportkühleinheit (26) nach einem der vorstehenden Ansprüche in den Anhänger (24) integriert ist.

## Revendications

1. Unité frigorifique de transport (26) permettant de refroidir de manière commandable un conteneur, l'unité frigorifique de transport comprenant :
un compresseur (58) construit et agencé pour comprimer un fluide frigorigène ;
un moteur de compresseur (60) configuré pour entraîner le compresseur ;
un échangeur de chaleur condenseur (64) accouplé de manière fonctionnelle au compresseur (58) ;
un ventilateur de condenseur (88) configuré pour fournir un écoulement d'air sur l'échangeur de chaleur condenseur ;
un moteur de ventilateur de condenseur (90) permettant d'entraîner le ventilateur de condenseur ;
un échangeur de chaleur évaporateur (76) couplé de manière fonctionnelle au compresseur ;
un ventilateur d'évaporateur (96) configuré pour fournir un écoulement d'air sur l'échangeur de chaleur évaporateur ;
un moteur de ventilateur d'évaporateur (98) permettant d'entraîner le ventilateur d'évaporateur ;
une batterie (52) configurée pour fournir au moins en partie de l'énergie électrique au moteur de compresseur ;
un chargeur de batterie (108) configuré pour charger la batterie ;
un générateur (54) configuré pour fournir de l'énergie électrique au moteur de compresseur et au chargeur de batterie ;
un moteur à combustion (56) construit et agencé pour entraîner le générateur (54) ; et
un système de gestion d'énergie (120) incluant un capteur de température de batterie (122), un capteur de courant de batterie (124), un capteur de courant de moteur de compresseur (126), un capteur de courant de générateur (128) et un dispositif de commande informatisé (82) configuré pour recevoir et traiter des signaux respectifs à partir du capteur de température de batterie, du capteur de courant de batterie, du capteur de courant de moteur de compresseur et du capteur de courant de générateur pour générer des données de diagnostic ;
dans laquelle le système de gestion d'énergie est configuré pour commander une distribution d'énergie via le générateur et/ou la batterie ;
dans laquelle le chargeur de batterie est alimenté par le générateur durant des conditions de fonctionnement en charge partielle de l'unité frigorifique de transport ;
dans laquelle au moins un du générateur (54) et de la batterie (52) est configuré pour fournir de l'énergie électrique aux moteurs de ventilateur de condenseur et de ventilateur d'évaporateur ;
dans laquelle le système de gestion d'énergie (120) inclut un capteur de température de liquide de refroidissement de moteur (130) configuré pour émettre un signal vers le dispositif de commande informatisé (82) pour une génération des données de diagnostic ; et
dans laquelle le système de gestion d'énergie (120) inclut un capteur de régime de moteur (132) configuré pour émettre un signal vers le dispositif de commande informatisé (82) pour une génération des données de diagnostic.

2. Unité frigorifique de transport (26) selon la revendication 1, dans laquelle le signal émis par le capteur de régime de moteur (132) indique un régime de moteur haut et un régime de moteur bas.

3. Unité frigorifique de transport (26) selon la revendication 1, dans laquelle le système de gestion d'énergie (120) inclut un capteur de courant de moteur de ventilateur de condenseur (134) et un capteur de courant de moteur de ventilateur d'évaporateur (136) configurés pour émettre des signaux respectifs vers le dispositif de commande informatisé (82) pour une génération des données de diagnostic.

4. Unité frigorifique de transport (26) selon la revendication 3, comprenant en outre :
un détendeur (74) disposé de manière fonctionnelle entre une sortie de l'échangeur de chaleur condenseur (64) et une entrée de l'échangeur de chaleur évaporateur (76), et dans laquelle le système de gestion d'énergie (120) inclut un capteur de pression de détendeur (138) configuré pour émettre un signal vers le dispositif de commande informatisé (82) pour une génération des données de diagnostic.

5. Unité frigorifique de transport (26) selon la revendication 4, comprenant en outre :
un robinet de modulation d'aspiration (80) disposé de manière fonctionnelle entre une sortie de l'échangeur de chaleur évaporateur (76) et une entrée du compresseur (58), et dans laquelle le système de gestion d'énergie (120) inclut un capteur de pression de robinet de modulation d'aspiration (140) configuré pour émettre un signal vers le dispositif de commande informatisé (82) pour une génération des données de diagnostic.

6. Unité frigorifique de transport (26) selon la revendication 1 ou 3, dans laquelle le système de gestion d'énergie (120) inclut un capteur de température de chargement avant (142) permettant de mesurer une température dans une portion avant du conteneur et un capteur de température de chargement arrière (144) permettant de mesurer une température dans une portion arrière du conteneur, et d'émettre des signaux respectifs vers le dispositif de commande informatisé (82) pour une génération des données de diagnostic.

7. Unité frigorifique de transport (26) selon la revendication 3, dans laquelle le moteur de compresseur (60) est un moteur CA. configuré pour recevoir du courant alternatif à partir du générateur (54), et dans laquelle les moteurs de ventilateur de condenseur et d'évaporateur (90, 98) sont des moteurs CC configurés pour recevoir du courant continu à partir de la batterie (52).

8. Unité frigorifique de transport (26) selon la revendication 3, dans laquelle le fluide frigorigène est un fluide frigorigène naturel.

9. Système de tracteur semi-remorque (20) comprenant un tracteur (22) et une remorque (24), dans lequel l'unité frigorifique de transport (26) selon une quelconque revendication précédente est intégrée dans la remorque (24).
